# EUROPÄISCHE PATENTSCHRIFT

(11) **EP 0 519 035 B1**
(45) Veröffentlichungstag und Bekanntmachung des Hinweises auf die Patenterteilung: **12.04.1995**
(21) Anmeldenummer: 92901832.3
(22) Anmeldetag: 09.01.1992
(51) Int. Cl.: C09K 3/32, C04B 28/02, C04B 20/10, B01J 20/04, E04H 6/42

(54) **VERWENDUNG VON EMULSIONEN DES TYPS ÖL-IN-WASSER, SOWIE VERFAHREN ZUR HERSTELLUNG VON BETONSTEINEN MIT BESONDEREN EIGENSCHAFTEN**
USE OF OIL-IN-WATER-TYPE EMULSIONS AND PROCESS FOR PRODUCING CONCRETE BLOCKS WITH SPECIAL PROPERTIES
UTILISATION D'EMULSIONS DU TYPE HUILE-DANS-L'EAU ET PROCEDE DE FABRICATION DE BLOCS EN BETON PRESENTANT DES PROPRIETES PARTICULIERES

(30) Priorität: 09.01.1991 AT 30/91; 15.07.1991 AT 1423/91
(43) Veröffentlichungstag der Anmeldung: 23.12.1992
(73) Patentinhaber: Gattinger, Heidemarie, A-9162 Kappel/Drau (AT)
(72) Erfinder: TEUBEL, Hanns-Thomas, A-2500 Baden (AT)
(74) Vertreter: Pollhammer, Gerda
(86) Internationale Anmeldenummer: AT9200002
(87) Internationale Veröffentlichungsnummer: WO9212215

(56) Entgegenhaltungen:
- EP-A- 0 149 396
- DE-A- 3 800 873
- GB-A- 2 011 368
- GB-A- 2 016 509
- WORLD PATENTS INDEX LATEST Week 8139, Derwent Publications Ltd., London, GB, AN81-70857D; & JP-A-56 100 883
- WORLD PATENTS INDEX Week 7832, Derwent Publications Ltd., London, GB, AN 78-57444A; & JP-A-53 074 713

## Beschreibung

Die Erfindung bezieht sich auf eine Verwendung von Emulsionen des Typs Öl-in-Wasser aus Fettsäuren (C₁₂ bis C₁₈) und/oder Carbonsäurewachsen, gegebenenfalls mit Zusatz von Paraffin, mit einem Schmelzpunkt des Festkörpers zwischen 40 und 80°C unter Verwendung von nicht-ionogenen Emulgatoren, gegebenenfalls teilneutralisiert mit Lauge, Amin oder Ammoniak als Zusatz zur Herstellung Kohlenwasserstoffe-absorbierender Betone bzw. Betonsteine, sowie auf ein Verfahren zur Herstellung von Kohlenwasserstoffe-adsorbierenden bzw. filtrierenden und ökologisch abbauenden Betonsteinen, sowie auf ein Verfahren zur Herstellung von Betonsteinen mit besonderen Eigenschaften.

Um die Umweltbelastung herabzusetzen, müssen im Bereich von Garagen sowie großen Parkflächen Maßnahmen getroffen werden, um zu verhindern, daß Ölreste in den Boden und damit ins Grundwasser gelangen. Aufwendige Abdichtungen sowie Ölabscheider stellen hier eine Lösung dar, welche jedoch in der Regel mit hohem Kostenaufwand verbunden ist.

Aus der GB-A 21 85 972 sind frostbeständige Aggregate mit geringem Gewicht und geringer Wasseradsorptionsfähigkeit bzw. wasserabstoßenden Eigenschaften bekanntgeworden, bei welchen das poröse Aggregat eine offenzellige Struktur besitzt und die Oberflächenporen mit einem gelartigen Material ausgefüllt sind.

Aus dem Buch "Werkstoffkunde für die Bauindustrie" sind Dichtmittel, die das Eindringen von Wasser in den Beton verhindern sollen, bekanntgeworden, mit welchen entweder die Poren des Betons verschlossen werden oder die kapillare Saugfestigkeit des Betons beseitigt wird.

Derartige bekannte Hydrophobierungen von Betonteilen halten nur kurz und werden auch nicht zu dem Zweck durchgeführt, daß der Beton Kohlenwasserstoffe adsorbieren soll.

Die Erfindung zielt nun darauf ab, einen Beton bzw. einen Betonstein zu schaffen, welcher den Vorteil bietet, nicht nur anfallendes Wasser in den Untergrund versickern zu lassen, sondern auch gegebenenfalls auf derartige Steine auftreffende Ölreste zu adsorbieren und in weiterer Folge sogar wieder ökologisch abbauen zu können. Diese Aufgabe wird durch die erfindungsgemäße Verwendung der eingangs genannten Emulsion des Typs Öl-in-Wasser für die Herstellung von Beton und Betonsteinen gelöst, wobei in vorteilhafter Weise so vorgegangen wird, daß als nicht-ionogener Emulgator aromatische Ethylenoxidaddukte, insbesondere Kresoladdukte, in einer Menge von 2 bis 15 Gew.-%, bezogen auf das Gewicht der Emulsion, eingesetzt werden. Ein derartiger nicht-ionogener Emulgator führt zu einer besonders stabilen Emulsion und erlaubt daher auch die Erzielung reproduzierbarer Eigenschaften bei den mit derartigen Emulsionen hergestellten Betonsteinen.

Die erfindungsgemäß in der Emulsion verwendeten Fettsäuren bzw. Carbonsäurewachse werden nach ihrem Abbinden in Beton bzw. Betonstein in der Regel als Calziumsalze vorliegen, wobei derartige Calziumsalze durch die Verwendung der genannten Emulsion bei der Herstellung der Betone bzw. Betonsteine homogen dispergiert werden und auf diese Weise für den gesamten Stein gleichbleibende Adsorptionsfähigkeit bzw. Filterfähigkeit erzielt wird. Erfindungsgemäß hat es sich gezeigt, daß die Adsorption bzw. der gewünschte Filtereffekt in vorteilhafter Weise dann erreicht wird, wenn so vorgegangen wird, daß Fettsäuren und Carbonsäurewachse in einer Menge von 3 bis 12 Gew.-%, vorzugsweise 6 bis 9 Gew.-%, der Emulsion eingesetzt sind, und daß eine derartige Öl-in-Wasser-Emulsion in einer Menge von 2 bis 7 Vol.-% des fertigen Betons eingesetzt wird, wobei zur Erhöhung der Stabilität und zur Verringerung eines Schäumens bei der Verwendung derartiger Emulsionen mit Vorteil so vorgegangen wird, daß die Teilneutralisierung auf einen pH-Wert von 6 bis 6,8 vorgenommen wird.

Das erfindungsgemäße Verfahren zur Herstellung von Kohlenwasserstoffe-adsorbierenden bzw. filtrierenden und ökologisch abbauenden Betonsteinen ist im wesentlichen dadurch gekennzeichnet, daß ein Leichtzuschlagstoff für den Beton des Betonsteines zusammen mit einem Farbzusatz in einem ersten Mischvorgang mit einer Emulsion des Typs Öl-in-Wasser hydrophobiert wird, bevor er mit üblichen Zuschlägen für die Herstellung von Beton, insbesondere vorgemischtem, hydrophobierten Zementleim, vermischt und in einem weiteren Vorgang in eine Form gegossen wird, worauf unter Anwendung eines Preßdruckes gerüttelt und zu einem Betonadsorptionsstein oder einer -platte ausgeformt wird. Bei einem derartigen Verfahren können konventionelle Betonmischer, insbesondere Freifallmischer, eingesetzt werden, wobei der Leichtzuschlagstoff in einen derartigen Zwangsmischer eingebracht werden kann und unter Verwendung der Emulsion zunächst hydrophobiert wird. Bei der Vermischung der Emulsion des Typs Öl-in-Wasser mit den Leichtzuschlagstoffen ergibt sich eine derartige Hydrophobierung nur dann ausreichend, wenn bei der Durchführung des erfindungsgemäßen Verfahrens eine entsprechende homogene Verteilung der Reaktionsprodukte im fertigen Beton sichergestellt wird, welche in der Folge das gewünschte Adsorptionsverhalten ermöglicht. Durch Anwendung des erfindungsgemäßen Verfahrens ist es möglich, einen Betonstein oder eine Betonplatte herzustellen, der (die) durch seine (ihre) Porosität und hohe Alkalität die besondere Eigenschaft besitzt, Kohlenwasserstoffe (Benzin, Diesel, Öl, etc.), die entweder mit oder ohne Wasser auf den Stein auftreffen, zu adsorbieren bzw. zu filtern und ökologisch wieder abzubauen.

Für die Herstellung des Betons bzw. Betonsteines werden übliche natürliche Baustoffe, wie Sand, Kies, hochwertiger Zement und Wasser, zusätzlich zu den Emulsionen des Typs Öl-in-Wasser der eingangs genannten Art eingesetzt, wobei als wesentlicher Vorteil ein Stein geschaffen wird, bei welchem Entsorgungsprobleme, wie sie durch Verschmutzungen mit Öl auftreten können, wesentlich herabgesetzt bis vermieden werden.

Der Zusatz der üblichen Zuschläge für die Herstellung von Beton erfolgt in einem zweiten Mischvorgang, wobei gegebenenfalls Farbzusätze vorgenommen werden können und Konsistenzschwankungen durch Zementleimbeigabe korrigiert werden können.

Eine bessere homogene Verteilung der oben genannten Emulsion läßt sich dadurch erzielen, daß so vorgegangen wird, daß in dem ersten Mischvorgang dem Leichtzuschlagstoff 2 bis 15 Gew.% der gesamten für die Herstellung des Betonsteins erforderlichen Zementmenge zugesetzt werden. Eine derartige Verfahrensweise führt dazu, daß auch ein Teil des Zementes und Wasser bereits mit der Emulsion versetzt werden, wobei die Emulsion gegebenenfalls unter geringfügig über der Raumtemperatur liegenden Temperaturen, wie beispielsweise Temperaturen von 40 bis 50°C, eingesetzt werden kann und in diesen Zementleim eingesprüht werden kann.

Ein wesentlicher Aspekt bei der Wahl der geeigneten Emulsion des Typs Öl-in-Wasser ist hiebei zum einen der Umstand, daß das erhaltene Produkt in Wasser nicht in Lösung gehen darf und in vorteilhafter Weise ökologisch abbaubar sein soll. Der mit der Emulsion versetzte Anteil des Leichtzuschlagstoffes, bezogen auf die fertige Betonmischung, kann in vorteilhafter Weise so eingestellt sein, daß Leichtzuschlagstoffe, insbesondere offenporige Zuschlagstoffe in einer Menge von 3 bis 40 Gew.-%, vorzugsweise 3 bis 10 Gew.-%, bezogen auf die fertige Mischung, eingesetzt werden, wobei der Anteil des Leichtzuschlagstoffes in der Betonrezeptur entsprechend den gewünschten Festigkeitswerten eingestellt wird. Zusätzlich zu dem oben genannten möglichen Farbzusatz oder aber auch als Ersatz für einen derartigen Farbzusatz kann mit Vorteil so vorgegangen werden, daß der Betonmischung 2 bis 3 Gew.-%, bezogen auf das Zementgewicht, Fe-Oxide zugesetzt werden, wobei ein derartiger Zusatz von Eisenoxiden die ökologische Abbaubarkeit fördert und eine Verschmutzung durch Grünwuchs weitgehend verhindert und gleichzeitig als Farbstoff zu bezeichnen ist.

Die eingangs genannte Emulsion des Typs Öl-in-Wasser kann insbesondere, wenn, wie es einer bevorzugten Ausbildung des erfindungsgemäßen Verfahrens entspricht, beim ersten Mischvorgang dem Leichtzuschlagstoff neben der Emulsion bereits ein Teil der Zementmenge zugesetzt wird, mit hoher Homogenität und hoher Reproduzierbarkeit zu den eingangs genannten Betonen bzw. Betonsteinen verarbeitet werden, wobei die fertigen Betonsteine, je nach Verwendungszweck und vorgesehener Form nach dem Rütteln bei einem definierten Preßdruck bei Umgebungstemperatur, insbesondere bei einer Temperatur von etwa 20°C und etwa 45% relativer Luftfeuchte, über einen Zeitraum von 1 bis 2 Tagen gelagert und getrocknet werden können.

Die Betonrezeptur (Mischverhältnis) wird vorteilhaft so gewählt, daß sich bei der Prüfung der Spaltzugfestigkeit laut ÖN B 3258 mindestens ein Wert von 1 N/mm² ergibt und die Wasserdurchlaufgeschwindigkeit des fertigen Betonadsorptionssteines nicht größer als 1500 l/s.ha, insbesondere nicht größer als 95 l/s.ha, und nicht kleiner als 30 l/s.ha (bei 8 cm Stärke) ist (Fugen bleiben unberücksichtigt). Die Wasserdurchlaufgeschwindigkeit wird in der Weise erreicht, indem eine Ausfallskornung verwendet wird, das heißt daß die Korngruppe 0/4 nicht oder in einer Menge von max. 5 Gew.% eingesetzt wird.

Das erfindungsgemäße Verfahren wird in der Folge an Hand einer schematischen Zeichnung, welche eine Anlage für die Durchführung des erfindungsgemäßen Verfahrens zeigt, näher erläutert. In dieser wird vorerst in einem Freifallmischer (M1) eine in der Waage (W2) abgewogene Menge Zement mit hoher Mahlfeinheit (> 4000 g/cm² Blaine-Wert) (S3) mit Wasser vermischt und durch Hinzugabe eines Hydrophobierungsmittels (E1-E2) der hergestellte Zementleim dahingehend verändert, daß nach der Erhärtung im Betonstein der Zementstein bzw. die Zementmatrix eine hochhydrophobe Oberfläche aufweist. Dies kann vorteilhaft mittels eines auf ca. 40-50° erwärmten Hydrophobierungsmittels (E1-E2) erfolgen, da einerseits die Erwärmung die Zementhydratation anregt und andererseits die Viskosität des Hydrophobierungsmittels (E1-E2) erniedrigt und so eine gleichmäßigere Verteilung erzielt werden kann. Dem Freifallmischer (M1) werden weiters in der Waage (W1) abgewogene Mengen an Leichtzuschlag 0/4 (S4) und Eisenoxidschwarz (S5) zugesetzt. Gleichzeitig wird im Hauptmischer (Zwangsmischer: M2) eine in der Waage (W3) abgewogene Menge Splitt 0/4 (S1), Splitt 4/8 (S2) und der bereits im M1 vorgemischte hydrophobierte Zementleim sowie gegebenenfalls zusätzlich erforderlicher Zement (S3) eingebracht und vermengt. Das Einbringen des vorbehandelten Leichtzuschlagstoffes (S4) in eine übliche extra gemischte Betonmischung hat den Vorteil, daß
1. die Poren des Leichtzuschlagstoffes (S4) in dem Freifallmischer (M1) nicht zerstört werden und die Mischzeit im Zwangsmischer (M2) dadurch relativ kurz gehalten werden kann;
2. die Hydrophobierung des Leichtzuschlagstoffes (S4) kann dadurch gezielter, in besonders vorteilhafter Weise, durchgeführt werden;
3. der Anteil (in Gew.-%) des Leichtzuschlagstoffes (z.B. 3-10 Gew.-%) bezogen auf die gesamte Betonmischung ist so gering, daß, wenn die einzelnen Komponenten hintereinander beigemengt würden, keine homogene Verteilung des Leichtzuschlagstoffes (S4) erreicht werden könnte. Die fertige Betonmischung wird aus dem Zwangsmischer (M2) über einen Förderer (F1) in eine Einrichtung (E3) ausgetragen, in welcher die Betonmische je nach Verwendungszweck in die vorgesehene Form eingebracht, in vorteilhafter Weise bei ca. 3000-4500 Umdrehungen pro Minute Mitteldruck gepreßt und wieder ausgeschalt, wird. Der fertige Betonadsorptionsstein wird über den Förderer (F2) ausgetragen und in einer Halle bei konstanter Temperatur ca. 20°C und 45% relativer Luftfeuchte ca. 1-2 Tage gelagert.

Durch das erfindungsgemäße Verfahren ist es möglich, durch Hydrophobierung eines geringen Anteils der gesamten Betonmische in einer ersten Stufe eine durchgehende Hydrophobierung des Endproduktes zu erzielen. Das erfindungsgemäße Hydrophobierungsmittel darf hiebei mit Wasser nicht in Lösung gehen.

Als Einsatzgebiet für die nach dem erfindungsgemäßen Verfahren herstellbaren Betonadsorptionssteine bzw. -platten kann neben öffentlichen Parkplätzen und Garagen, insbesondere auch ein Einsatz im Parkplatzbereich bei Tankstellen und Waschplätzen angeführt werden, d.h. hauptsächlich dort, wo mit Benzin, Diesel, Öl, etc.Verschmutzungen zu rechnen ist. Insbesondere im Zusammenhang mit dem Einsatz der erfindungsgemäß erhältlichen Betonsteine bei Waschplätzen kommt der erfindungsgemäß erzielte Filtereffekt zum Tragen, wobei weitgehend gereinigtes Wasser an der Unterseite des Steines austreten kann, und dies auch dann, wenn Waschlaugen und übliche Waschmittel beigemengt sind.

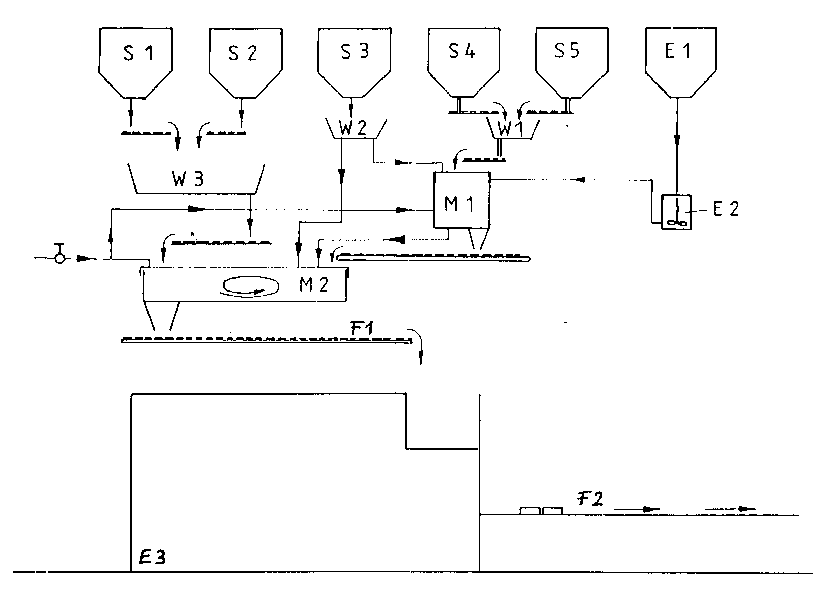

## Patentansprüche

1. Verwendung von Emulsionen des Typs Öl-in-Wasser aus Fettsäuren (C₁₂ bis C₁₈) und/oder Carbonsäurewachsen, gegebenenfalls mit Zusatz von Paraffin, mit einem Schmelzpunkt des Festkörpers zwischen 40 und 80°C unter Verwendung von nicht-ionogenen Emulgatoren, gegebenenfalls teilneutralisiert mit Lauge, Amin oder Ammoniak als Zusatz zur Herstellung Kohlenwasserstoffe-absorbierender Betone bzw. Betonsteine.

2. Verwendung nach Anspruch 1, dadurch gekennzeichnet, daß als nicht-ionogener Emulgator aromatische Ethylenoxidaddukte, insbesondere Kresoladdukte, in einer Menge von 2 bis 15 Gew.-%, bezogen auf das Gewicht der Emulsion, eingesetzt werden.

3. Verwendung nach Anspruch 1 und 2, dadurch gekennzeichnet, daß Fettsäuren und Carbonsäurewachse in einer Menge von 3 bis 12 Gew.-%, vorzugsweise 6 bis 9 Gew.-%, der Emulsion eingesetzt sind, und daß eine derartige Öl-in-Wasser-Emulsion in einer Menge von 2 bis 7 Vol.-% des fertigen Betons eingesetzt wird.

4. Verwendung nach Anspruch 1, 2 oder 3, dadurch gekennzeichnet, daß die Teilneutralisierung auf einen pH-Wert von 6 bis 6,8 vorgenommen wird.

5. Verfahren zur Herstellung von Kohlenwasserstoffe-adsorbierenden bzw. filtrierenden und ökologisch abbauenden Betonsteinen nach einem der Ansprüche 1 bis 4, dadurch gekennzeichnet, daß ein Leichtzuschlagstoff (S4) für den Beton des Betonsteines zusammen mit einem Farbzusatz (S5) in einem ersten Mischvorgang (M1) mit einer Emulsion des Typs Öl-in-Wasser hydrophobiert wird, bevor er mit üblichen Zuschlägen für die Herstellung von Beton, insbesondere vorgemischtem, hydrophobierten Zementleim (S3 + Wasser) vermischt und in einem weiteren Vorgang in eine Form gegossen wird, worauf unter Anwendung eines Preßdruckes gerüttelt und zu einem Betonadsorptionsstein oder einer -platte ausgeformt wird.

6. Verfahren nach Anspruch 5, dadurch gekennzeichnet, daß in dem ersten Mischvorgang (M1) dem Leichtzuschlagstoff (S4) 2 bis 15 Gew.-% der gesamten, für die Herstellung des Betonsteins erforderlichen Zementmenge zugesetzt werden.

7. Verfahren nach einem der Ansprüche 1 bis 6, dadurch gekennzeichnet, daß der Betonmischung 2 bis 3 Gew.-%, bezogen auf das Zementgewicht, Fe-Oxide zugesetzt werden.

8. Verfahren nach einem der Ansprüche 1 bis 7, dadurch gekennzeichnet, daß Leichtzuschlagstoffe (S4), insbesondere offenporige Zuschlagstoffe, in einer Menge von 3 bis 40 Gew.-%, vorzugsweise 3 bis 10 Gew.-%, bezogen auf die fertige Mischung (M2), eingesetzt werden.

## Claims

1. The application of oil-in-water emulsions of fatty acids (C₁₂ to C₁₈) and/or of carboxylic acid waxes, with the addition, when so desired, of paraffin, with a solid melting point between 40 and 80 °C, employing non-ionogenic emulsifiers partially neutralized, if so desired, with lye, amine, or ammonia as additives, for the productin of concretes or concrete blocks which absorb hydrocarbons.

2. The application as claimed in claim 1, characterized in that the employed non-ionogenic emulsifier is represented by aromatic ethylene oxide adducts, particularly cresol adducts, in a quantity of 2 to 15 % by weight, relative to the weight of the emulsion.

3. The application as claimed in claim 1 or 2, characterized in that fatty acids and carboxylic acid waxes are added to the emulsion in a quantity of 3 to 12 % by weight and an oil-in-water emulsion of this kind is employed in a quantity of 2 to 7 % by volume of the finished concrete.

4. The application as claimed in claim 1, 2 or 3, characterized in that the partial neutralization effects a pH value of 6 to 6.8.

5. A process for the production of concrete blocks which absorb or filter hydrocarbons with an ecologically degrading effect as claimed in one of the claims 1 to 4, characterized in that a lightweight aggregate (S4) for the concrete of the concrete blocks, together with a color additive (S5), is waterproofed with an oil-in-water emulsion in a first mixing stage (M1) before it is mixed with conventional additives for the production of concrete, particularly premixed waterproofed cement paste (S3 + water), and in a further stage is poured into a form, whereupon it is vibrated under pressure and molded into an absorptive concrete block and/or slab.

6. Process as claimed in claim 5, characterized in that 2 to 15 % by weight of the entire quantity of the cement required to produce the concrete block is added to the lightweight aggregate (S4) during an initial mixing stage (M1).

7. Process as claimed in anyone of claims 1 to 6, characterized in that 2 to 3 % by weight Fe oxides, relative to the cement weight, are added to the concrete mixture.

8. Process as claimed in anyone of claims 1 to 7, characterized in that lightweight aggregates (S4), particularly porous additives, are added to the finished mixture (M2) in a quantity of 3 to 40 % by weight, preferably 3 to 10 % by weight, relative to the final mixture.

## Revendications

1. Utilisation d'émulsions du type huile-dans-l'eau d'acides gras (C₁₂ à C₁₈) et/ou de cires carboxyliques, avec ajout éventuel de paraffine, avec un point de fusion du corps solide de 40 à 80°C en utilisant des émulsifiants non ioniques, ces émulsions pouvant être partiellement neutralisées par une base, une amine ou de l'ammoniac, comme additif pour la fabrication de bétons et/ou blocs en béton absorbant les hydrocarbures.

2. Utilisation suivant la revendication 1, caractérisée en ce que des adduits aromatiques d'oxyde d'éthylène, de crésol notamment, sont utilisés à raison de 2 à 15 % en poids, rapporté au poids de l'émulsion, comme émulsifiants non ioniques.

3. Utilisation suivant les revendications 1 et 2, caractérisée en ce que des acides gras et cires carboxyliques sont utilisés à raison de 3 à 12 % en poids, de 6 à 9 % en poids de préférence, de l'émulsion, et en ce qu'une telle émulsion huile-dans-l'eau est utilisée à raison de 2 à 7 % en volume du béton fini.

4. Utilisation suivant les revendications 1, 2 ou 3, caractérisée en ce que la neutralisation partielle est assurée à un pH de 6 à 6,8.

5. Procédé de fabrication de blocs en béton adsorbant et/ou filtrant et dégradant écologiquement les hydrocarbures, suivant l'une quelconque des revendications 1 à 4, caractérisé en ce qu'un agrégat léger (S4) pour le béton du bloc est hydrofugé, avec un ajout de pigment (S5), dans une première opération de mélange (M1) avec une émulsion du type huile-dans-l'eau, avant qu'il ne soit mélangé à des additifs courants pour la fabrication du béton, une pâte de ciment prémélangée et hydrofugée (S3 + eau), notamment, et coulé dans un moule dans une opération ultérieure, puis secoué sous une pression de serrage et conformé en un bloc ou une dalle d'adsorption en béton.

6. Procédé suivant la revendication 5, caractérisé en ce que 2 à 15 % en poids de la quantité totale de ciment, requise pour la fabrication du bloc en béton, sont ajoutés à l'aggrégat léger (S4) dans la première opération de mélange (M1).

7. Procédé suivant l'une quelconque des revendications 1 à 6, caractérisé en ce que 2 à 3 % en poids d'oxydes de fer, rapporté au poids du ciment, sont ajoutés au mélange de béton.

8. Procédé suivant l'une quelconque des revendications 1 à 7, caractérisé en ce que des agrégats légers (S4), à pores ouverts notamment, sont utilisés dans une proportion de 3 à 40 % en poids, de 3 à 10 % en poids de préférence, par rapport au mélange fini (M2).
